# EUROPÄISCHE PATENTSCHRIFT

(11) **EP 2 002 947 B1**
(45) Veröffentlichungstag und Bekanntmachung des Hinweises auf die Patenterteilung: **10.03.2010**
(21) Anmeldenummer: 07011360.0
(22) Anmeldetag: 11.06.2007
(51) Int. Cl.: B25J 15/04, B24C 3/18

(54) **Strahlanlage mit einem Roboter zum Behandeln von unterschiedlichen Gusswerkstücke**
Blasting plant with a robot for treating various castings
Installation de grenaillage avec un robot pour traiter différentes pièces de fonderies

(43) Veröffentlichungstag der Anmeldung: 17.12.2008
(73) Patentinhaber: DISA Industrie AG, 8184 Bachenbülach (CH)
(72) Erfinder: Indlekofer, Markus, 79771 Klettgau (DE)
(74) Vertreter: Weiss, Wolfgang

(56) Entgegenhaltungen:
- EP-A- 1 256 422
- EP-A- 1 714 742
- WO-A-2006/061677
- JP-A- 4 189 489
- JP-A- 9 193 020
- JP-A- 60 067 278
- US-A- 4 545 723

## Beschreibung

Die Erfindung bezieht sich auf eine Strahlanlage mit einem Roboter zum Behandeln von unterschiedlichen Gusswerkstücken, wobei der Roboter einen Roboterarm mit Greifffingern aufweist und wobei die Strahlanlage eine Strahlkammer mit einem Greifarm aufweist.

Strahlanlagen mit Robotern können ohne wesentliche Überwachung durch das Personal grosse Serien von Werkstücken bearbeiten. Für eine bestimmte Werkstückgeometrie ist der Roboter mit einem auf die Geometrie des zu bearbeitenden Werkstückes abgestimmten Arm ausgelegt. Wenn in einer Anlage verschiedene Geometrien bearbeitet werden müssen, müssten ebenso viele Roboterarbeitsplätze vorgesehen werden. Bei kleineren Serien oder bei häufigem Wechsel der Geometrien wird der Aufwand für solche Roboterarbeitsplätze gross.

Aus der EP 1714742 ist eine Schleuderstrahlanlage zum Strahlen von Werkstücken aus Leichtmetalllegierungen bekannt. Das Gusswerkstück wird eingespannt zwischen Drehlagern eines Schwenkarmes gehalten, der wiederum von Servomotoren angesteuert werden kann. Das Gusswerkstück, das von einem Roboterarm in die Strahlkammer eingebracht wurde, kann somit in allen Richtungen gedreht werden und vom Strahlmittel aus feststehenden Strahlmittelquellen angestrahlt werden.

Aus der US 4545723 ist weiterhin einen Adapter bekannt, der zwischen einem Roboterarm eines Raumfahrzeuges und einer grossen Anzahl Objekten unterschiedlicher Grösse und Geometrie eingesetzt werden kann. Der Adapter kann einerseits immer in einfacher Weise an den Roboterarm und andererseits jeweils an einem bestimmten Objekt angepasst werden.

Ausgehend von diesem Stand der Technik ist es Aufgabe der Erfindung, eine Vorrichtung anzugeben, die auch bei kleineren Serien, oder bei häufig wechselnden Geometrien die Werkstücke mit demselben Roboterarm in die Strahlkammer einbringen kann.

Diese Aufgabe wird gelöst durch eine Strahlanlage mit einem Roboter zum Behandeln von unterschiedlichen Gusswerkstücken wobei der Roboter einen Roboterarm mit Greifffingern aufweist und wobei die Strahlanlage eine Strahlkammer mit einem Greifarm aufweist, wobei für jeden Werkstücktyp eine spezielle Haltevorrichtung vorgesehen ist, wobei die Haltevorrichtungen Greifelemente angepasst an die Greifffinger des Roboters und Halteelemente anpassbar ausgebildet an die unterschiedlichen Gusswerkstücke aufweisen, derart, dass jede Haltevorrichtung in gleicher Weise an die Greifffinger angepasst ausgebildet ist und wobei die Haltevorrichtungen einen Kupplungsarm mit einem Kupplungsstift mittels eines Kupplungselementes anpassbar an den Greifarm der Strahlkammer aufweisen.

Ein Ausführungsbeispiel der Erfindung wird anhand der Figuren beschrieben. Es zeigen:
Figur 1 eine perspektivische Sicht auf eine Strahlanlage mit einem Roboterarbeitsplatz,
Figur 2 eine Sicht auf die Strahlanlage von Figur 1 mit Sicht in die Strahlkammer,
Figur 3 eine Vergrösserung der Strahlkammer von Figur 2,
Figuren 4 und 5 eine Sicht auf eine erste erfindungsgemässe Haltevorrichtung,
Figuren 6 und 7 eine Sicht auf eine weitere erfindungsgemässe Haltevorrichtung und
Figur 8 eine Sicht auf ein mit den Haltevorrichtungen aus Figuren 4 bis 7 zusammenwirkendes Kupplungselement in die Strahlkammer von Figur 1.

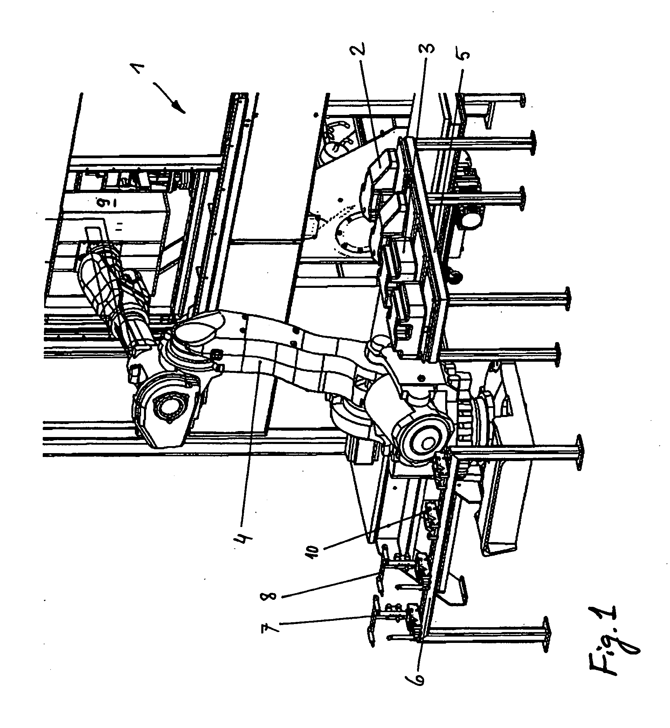

In Figur 1 ist schematisch eine Strahlanlage 1 zum Strahlen von Gusswerkstücken 2, 3 verschiedener Geometrien aus Leichtmetalllegierungen, beispielsweise Aluminium- oder Magnesiumlegierungen dargestellt. Am Arbeitsplatze des Roboters 4 ist ein Tisch 5 mit verschiedenen Werkstücken 2, 3 und ein weiterer Tisch 6 mit verschiedenen Haltevorrichtungen 7,8 und mit weiteren Kupplungselementen 10 dargestellt. Auf dem Tisch 4 werden die Werkstücke 2, 3, die noch bearbeitet werden müssen, bereitgestellt. Auf dem zweiten Tisch 6 werden die verschiedenen Haltevorrichtungen 7, 8 gelagert. Der Roboter 4 nimmt für jedes Werkstück 2, 3 zuerst die dazu gehörende Haltevorrichtung 7, 8, dann das Werkstück 2 ,3 und bringt dann das so vorbereitete Werkstück 2, 3 mit der Haltevorrichtung 7, 8 in die Strahlkammer 9.

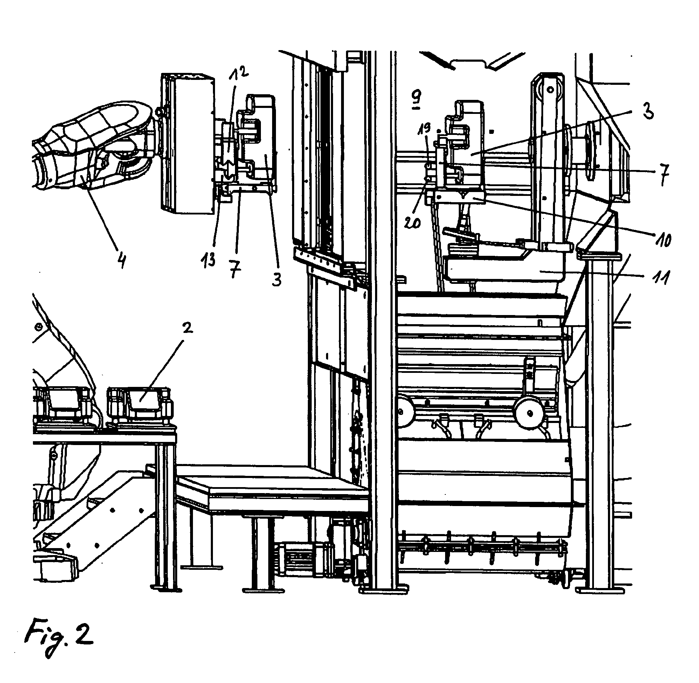

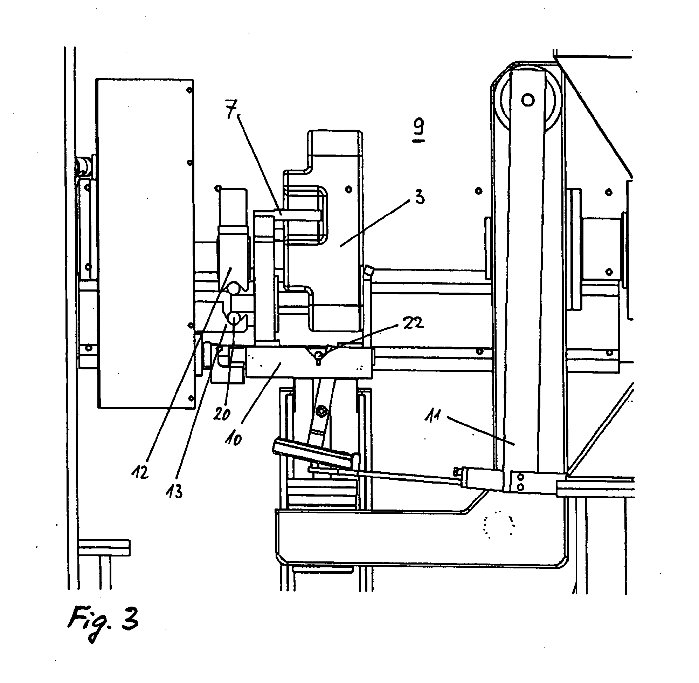

In Figur 2 und vergrössert in Figur 3 ist die Strahlkammer 9 zeitlich geöffnet dargestellt. Das Werkstück 3 wird von einer Haltevorrichtung 7 und einem Kupplungselement 10 gehalten und in die Strahlkammer 9 an einem aus der EP 1714742 bekannten Greifarm 11 fixiert. Vom Roboter 4 sind noch die Greiffinger 12, 13 ersichtlich, die die Haltevorrichtung 7 zusammen mit dem Werkstück 3 und dem Kupplungselement 10 in die Strahlkammer 9 eingebracht haben

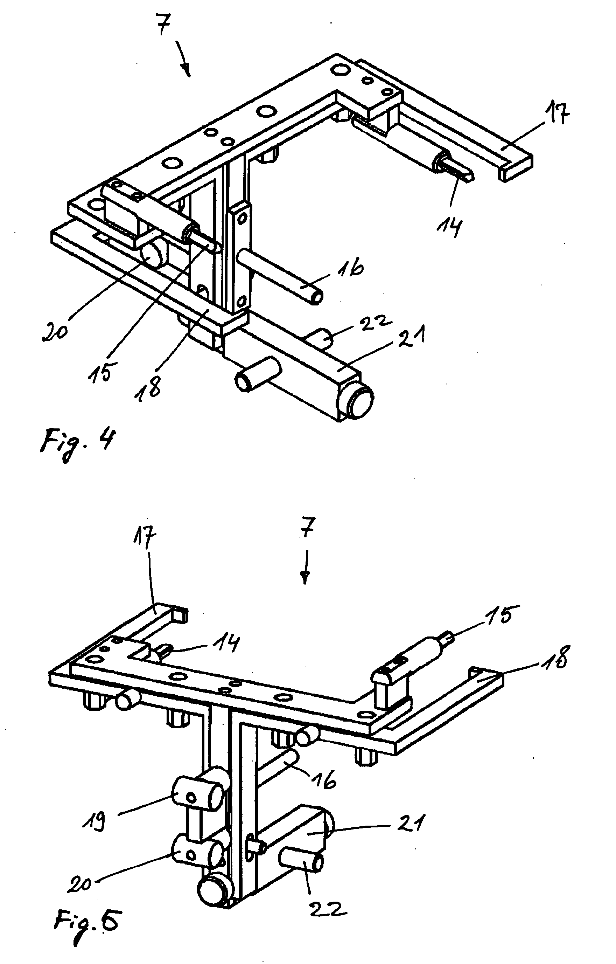

In Figuren 4 und 5 ist eine erste Haltevorrichtung 7 für sich alleine perspektivisch dargestellt. Die Haltevorrichtung 7 besitzt Haltestifte 14, 15, die zu Öffnungen am Werkstück 3 passen und in diese Öffnungen eingeführt werden können. Die Haltevorrichtung weist beispielsweise einen weiteren Stift 16 auf zur Positionierung des Werkstückes 3 auf. Auch Klammern 17, 18 zum Halten des Werkstückes 3 sind ersichtlich. Auf der dem Roboter 4 zugewandten Seite sind zylinderförmige Greifelemente 19, 20 ersichtlich die von den Greifffingern 12, 13 des Roboters 4 gegriffen werden können. Auf der unteren dem Greifarm 11 der Strahlkammer 9 zugewandten Seite ist Kupplungsarm 21 mit einem Kupplungsstift 22 zur Verbindung mit dem Kupplungselement 10 ersichtlich.

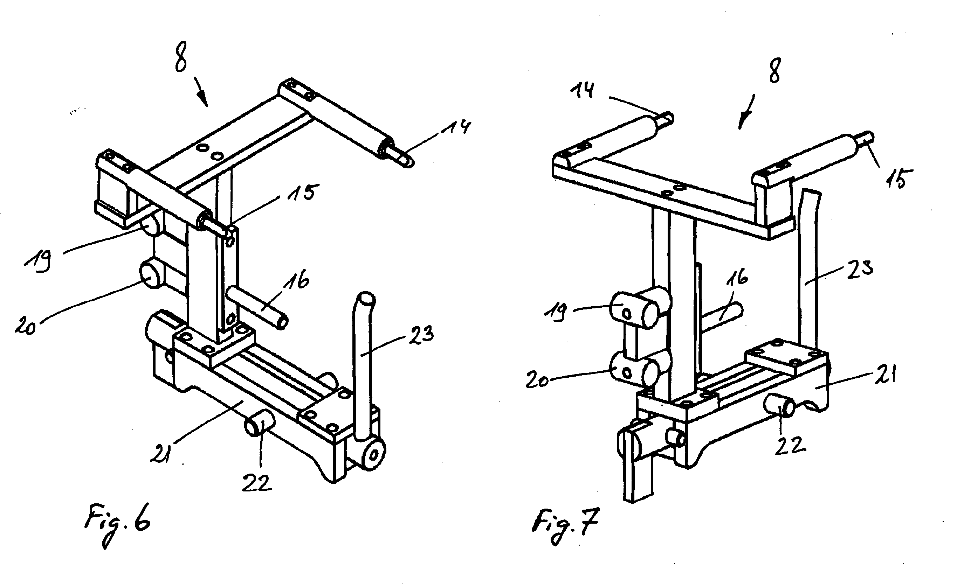

In Figuren 6 und 7 ist eine weitere Haltevorrichtung 8 für sich alleine dargestellt. Die Haltevorrichtung 8 weist zum Teil die gleichen Haltestifte 14, 15, Greifelemente 19, 20 Kupplungsarm 20 mit Kupplungsstift 22 auf wie die Haltevorrichtung 7 aus Figuren 4 und 5. Die Haltevorrichtung 8 weist zusätzlich einen hinteren Haltefinger 23 um das Werkstück 4 auch auf der Rückseite zu halten auf. Die Haltevorrichtung 8 kann somit aus den gleichen Bauteilen wie die Haltevorrichtung 7 zusammengesetzt werden. Die genauen Positionen der Haltestifte 14, 15 und des Haltefingers 23 oder der Klammern 17, 18 im dreidimensionalen Raum können an die Geometrie des Werkstückes angepasst werden.

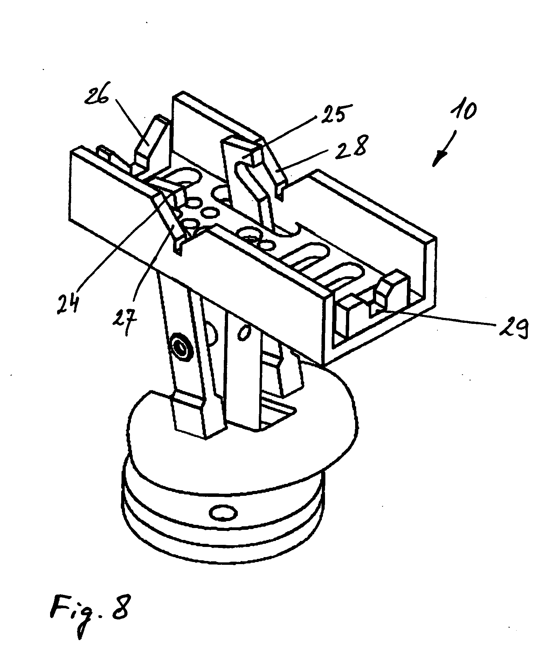

In Figur 8 ist das Kupplungselement 10 für sich alleine dargestellt. Das Kupplungselement 10 dient zur Kupplung der Haltevorrichtungen 7, 8 an dem Greifarm 11 in der Strahlkammer 9. Im Kupplungselement 10 sind Klinken 24, 25 ersichtlich, die vom Servomotor des Greifarmes 11 bedient werden und so das Werkstück 2,3 in der Strahlkammer 9 in jeder gewünschten Position halten. Das Kupplungselement 10 weist auch Lagerstellen 26, 27, 28, 29 auf zur sicheren Lagerung der Haltevorrichtung 7, 8 zusammen mit dem Gusswerkstück 2, 3.

Die erfindungsgemässe Haltevorrichtung 7, 8 ist einfach aus den verschieden Bauteilen zusammenzubauen. Die Haltevorrichtung 7,8 wird eingesetzt zwischen einem bestehenden Roboterarm 4 und Gusswerkstücken 2,3 mit unterschiedlichen Geometrien. Ein zusätzlicher Roboterarm für jede neue Werkstückgeometrie kann weggelassen werden, wodurch erhebliche Kosten eingespart werden. Mit der hier vorgeschlagenen Haltevorrichtung 7,8 kann auch bei kleineren Serien vollautomatisch gearbeitet werden. Auch der Greifarm 11 in der Strahlkammer 9 muss nicht mehr für jede Werkstückgeometrie ausgetauscht werden. Es wird hiermit auch möglich, die Werkstücke 7,8 chaotisch, d.h. in willkürlicher Reihefolge, der Strahlanlage zuzuführen. Der Roboter 4 wird während des eigentlichen Strahlvorganges nicht benötigt und kann bereits das nächste Werkstück 2,3 für die Bearbeitung in derselben Strahlkammer 9 vorbereiten.

## Patentansprüche

1. Strahlanlage (1) mit einem Roboter zum Behandeln von unterschiedlichen Gusswerkstücken (2, 3), wobei der Roboter einen Roboterarm (4) mit Greifffingern (12, 13) aufweist und wobei die Strahlanlage (1) eine Strahlkammer (9) mit einem Greifarm (11) aufweist, **dadurch gekennzeichnet, dass** für jeden Werkstücktyp eine spezielle Haltevorrichtung (7,8) vorgesehen ist, dass die Haltevorrichtungen (7, 8) Greifelemente (19, 20) angepasst an die Greifffinger (12, 13) des Roboters und Halteelemente (14, 15, 16, 17, 18, 23) anpassbar ausgebildet an die unterschiedlichen Gusswerkstücke (2, 3) aufweisen, derart, dass jede Haltevorrichtung (7, 8) in gleicher Weise an die Greifffinger (12, 13) angepasst ausgebildet ist und dass die Haltevorrichtungen (7,8) einen Kupplungsarm (21) mit einem Kupplungsstift (22) mittels eines Kupplungselementes (10) anpassbar an den Greifarm (11) der Strahlkammer (9) aufweisen.

## Claims

1. Blasting plant (1) with a robot for treating various castings (2, 3), the robot having a robot arm (4) with gripping fingers (12, 13), and the blasting plant (1) having a blasting chamber (9) with a gripping arm (11), **characterized in that** a specific holding device (7, 8) is provided for each workpiece type, **in that** the holding devices (7, 8) have gripping elements (19, 20), adapted to the gripping fingers (12, 13) of the robot, and holding elements (14, 15, 16, 17, 18, 23), designed to be adaptable to the various castings (2, 3), in such a way that each holding device (7, 8) is designed to be adapted to the gripping fingers (12, 13) in the same way, and **in that** the holding devices (7, 8) have a coupling arm (21) with a coupling pin (22) such as to be adaptable to the gripping arm (11) of the blasting chamber (9) by means of a coupling element (10).

## Revendications

1. Installation de grenaillage (1) comprenant un robot pour traiter différentes pièces de fonderie (2, 3), le robot présentant un bras de robot (4) avec des doigts de préhension (12, 13), et l'installation de grenaillage (1) présentant une chambre de grenaillage (9) avec un bras de préhension (11), **caractérisée en ce que** pour chaque type de pièce, on prévoit un dispositif de fixation spécial (7, 8), **en ce que** les dispositifs de fixation (7, 8) présentent des éléments de préhension (19, 20) adaptés aux doigts de préhension (12, 13) du robot et des éléments de fixation (14, 15, 16, 17, 18, 23) réalisés de manière à pouvoir être adaptés aux différentes pièces de fonderie (2, 3), de telle sorte que chaque dispositif de fixation (7, 8) soit réalisé de manière identique de façon adaptée aux doigts de préhension (12, 13) et **en ce que** les dispositifs de fixation (7, 8) présentent un bras d'accouplement (21) avec une goupille d'accouplement (22) pouvant être adaptée au moyen d'un élément d'accouplement (10) au bras de préhension (11) de la chambre de grenaillage (9).
